# EUROPEAN PATENT APPLICATION

(11) **EP 4 009 484 A1**
(43) Date of publication of application: **08.06.2022**
(21) Application number: 20212325.3
(22) Date of filing: 07.12.2020
(51) Int. Cl.: H02J 11/00, E21B 43/01, F16L 53/34

(54) **POWER DISTRIBUTION SYSTEM**

(71) Applicant: Aker Solutions AS, 1325 Lysaker (NO)
(72) Inventor: BJERKNES, Ole Johan, 0786 Oslo (NO); MÜLLER, Leif Arne, 1481 Hagan (NO); HEGGDAL, Ole A., 1475 Finstadjordet (NO)
(74) Representative: Protector IP AS

(57) **Abstract**

A power distribution system comprising a first transformer (125) at a first location (10) and a second transformer (25) at a second location (20). Two electric end points (P, R), being electric power supplies or consumers, are connected to the first transformer (125) at the first location and two electric end points (Q, S), being electric power supplies or consumers, are connected to the second transformer (25), wherein a cable arrangement (29) comprising a plurality of cable conductors extends between the first and second transformers. The power distribution system is configured to distribute electric power between two electric end points of a respective first pair of end points (P, Q) and a second pair of end points (R, S) at arbitrary direction and simultaneously through the same cable conductors of the cable arrangement (29).

## Description

### Technical Field

The present invention relates to a power distribution system. In particular, the presented power distribution system is suitable for distribution of power between different offshore locations, or offshore locations and onshore locations. Typically, with the system, electric power may be supplied from a first location, which may be a topside or onshore location, to a subsea location. The system may, however, also be applied with two onshore locations.

### Background Art

There are known various configurations for power supply systems that are adapted for powering remote, electrical high-power consumers on the seabed. A typical application may be powering an electric motor that runs a compressor or a pump for transporting produced hydrocarbons through a steel pipeline. Such power supply systems must be reliable, since a repair or replacement of malfunctioning equipment on the seabed is both time-consuming and expensive.

Various power supply systems have been disclosed, which are interchangeable between a 3-phase motor powering mode, and a heating mode for heating of a subsea pipeline. A common heating solution is known as direct electric heating (DEH), where current is carried in a cable adjacent the pipeline and enters the end portion of the pipeline so that the pipeline is heated due to the current flow inside it.

It is also known to heat a subsea pipeline by means of induction, wherein varying electromagnetic fields are used to heat the pipeline.

Publication US6617556 describes a system with a topside 3-phase power supply and a subsea cable leading to a wellhead platform. The system can be switched between a heating mode and a powering mode. In the heating mode, electric power is used to heat a subsea pipeline arranged adjacent the subsea cable. In the power mode, the subsea cable conveys electric power to subsea loads. The system comprises power switches at both ends of the electric cable.

EP1836375 also presents a system having a topside power supply that can be switched between a pipeline heating mode, and a motor powering mode. In the motor powering mode, a frequency converter connected to a three-phase power source delivers power, through a subsea cable, to a subsea motor. The subsea cable is arranged adjacent a subsea pipeline. In a heating mode, a symmetry and power factor compensation unit connects to the three-phase power source and delivers, through the subsea cable, electric current into the pipeline (DEH - direct electric heating). Topside switches and a subsea switch are used to select between the modes.

Publication EP2964993 relates to an electric power supply system configured for providing a single-phase supply for DEH and 3-phase supply for an electric motor. A switching section is provided for interchanging between the single-phase mode and the 3-phase mode.

With the growth of renewable power production, typically from wind turbines, PV systems or wave power plants, electrical power distribution systems are developed further.

As a background for the present disclosure, reference is made to Norwegian patent application NO20190706. Various techniques for power distribution, similar or corresponding to the techniques discussed in the present application, are discussed in said application.

An object of the present invention may be to provide an electric power distribution system which is less exposed for malfunctioning.

Another object of the present invention may be to provide an electric power distribution system which is less expensive, while still meeting the needs of an operator.

A further object of the present invention may be to provide a versatile power distribution system configured for simultaneous import and export of electric power.

Still a further object may be to provide a power distribution system where different power transmissions can be transmitted through the same cable arrangement.

### Summary of invention

According to a first aspect of the present invention, there is provided a power distribution system according to claim 1.

In some embodiments, the system comprises a swivel with electric slip rings for transmission of power through the turret of a ship, such as an FPSO.

As the skilled reader will appreciate, the said cable arrangement, which connects the first distribution lines and the second distribution lines, may be one of more components that establish that connection. I.e. the cable arrangement may be directly or indirectly connected to said distribution lines. For instance, the said cable arrangement may be one of more cables.

According to a second aspect of the invention there is provided a method according to claim 8.

Furthermore, according to a third aspect of the invention, there is provided a power distribution system according to claim 9.

The common transformer flux path, shared by two or more windings, will typically be in one common transformer leg. In some embodiments though, the common flux path may be in different transformer legs, which constitute a common flux path.

### Brief description of drawings

While various features of the invention have been discussed in general terms above, some more detailed examples of embodiment are given in the following with reference to the drawings, in which
- Fig. 1: depicts a principle overview of an embodiment of the invention, where an FPSO is importing power from shore while powering various subsea consumers;
- Fig. 2: is a schematic illustration an embodiment of the invention, showing winding of a first and a second transformer;
- Fig. 3: is another schematic illustration of an embodiment of the invention, where the power distribution system is configured to transmit two three-phase distributions; and
- Fig. 4: depicts the inventive idea of the invention with a schematic illustration.

### Detailed description of the invention

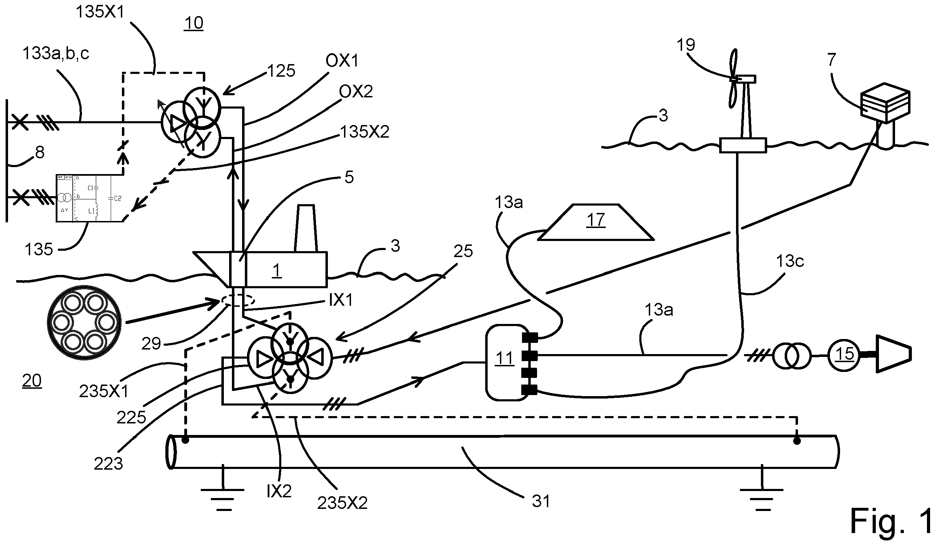

Fig. 1 depicts an example of application of the power distribution system according to the present invention. An FPSO 1 (floating production storage and offloading) is arranged on the sea surface 3. The FPSO 1 is arranged at a first location 10. In the shown embodiment, the first location 10 is an offshore location. However, the first location may in other embodiments be an onshore location.

A second location 20 is at the seabed. The second location could however be elsewhere, such as onshore or at the sea surface.

A riser extends between the seabed and the surface structure 1. The riser comprises a cable arrangement 29, through which power can be imported to or distributed from the FPSO 1.

In the embodiment shown in Fig. 1, a steel pipeline 31 extends along the seabed. Typically, the steel pipeline 31 will carry produced hydrocarbons originating from a subsea well (not shown). As is well known to the skilled person in the art, such pipelines may need to be heated to prevent formation of wax and hydrates inside the pipeline. Such heating may typically be done with direct electric heating (DEH), which is well known in the art. Thus, the FPSO 1 may deliver power for heating of the pipeline 31.

The power distribution system comprises a first transformer 125 and a second transformer 25. In the shown embodiment, the first transformer 125 is arranged on the shown FPSO 1, while the second transformer 25 is arranged at the seabed. It will be understood, however, that their locations may be different for other embodiments.

In the shown example, power from the first transformer 125 is transferred through a swivel 5 on the FPSO 1 (typically in the FPSO turret). Since the swivel 5 has a limited slip rings (not shown), through which electric power can be transmitted, it is preferable to exploit the available slip rings as best as possible.

It will be understood, that in other embodiments, such as without an FPSO or without a swivel, the invention will still be advantageous. For instance, as a result of the invention, one may exploit a cable arrangement having less conductors than what would be needed with power distribution systems according to the prior art.

Still referring to Fig. 1, the FPSO 1 receives power from a PfS arrangement 7 (Power from Shore). The PfS arrangement 7 is arranged at sea, as indicated. The FPSO 1 has a power grid 8.

Hence, power is supplied from the PfS arrangement 7, through the second transformer 25, further through the cable arrangement 29 to the first transformer 125, and to the power grid 8 of the FPSO.

Furthermore, the FPSO 1 powers various equipment subsea. The FPSO 1 comprises a symmetrisation unit 135. Power from the symmetrisation unit 135 is transmitted via the first transformer 125, through the cable arrangement 29, and to the second transformer 25. From the second transformer 25, this power, i.e. this current, is connected to a steel pipeline 31 on the seabed. One line 235X1 connects the second transformer 25 to one of said ends, while another line 235X2 connects the second transformer 25 to a more remote end of the pipeline.

Furthermore, in this embodiment, the second transformer 25 further comprises auxiliary windings 225 connected to auxiliary primary lines 223. The auxiliary primary lines 223 connect to a subsea switchboard 11. From the subsea switchboard 11 extends a power line 13a that powers a subsea motor 15.

Also extended from the subsea switchboard 11 is another power line 13b, which extends to a subsea compression arrangement 17, configured for compression of natural gas.

A further power line 13c extends between the subsea switchboard 11 to an offshore wind turbine facility 19. The wind turbine facility 19 can thus provide power to the FPSO 1.

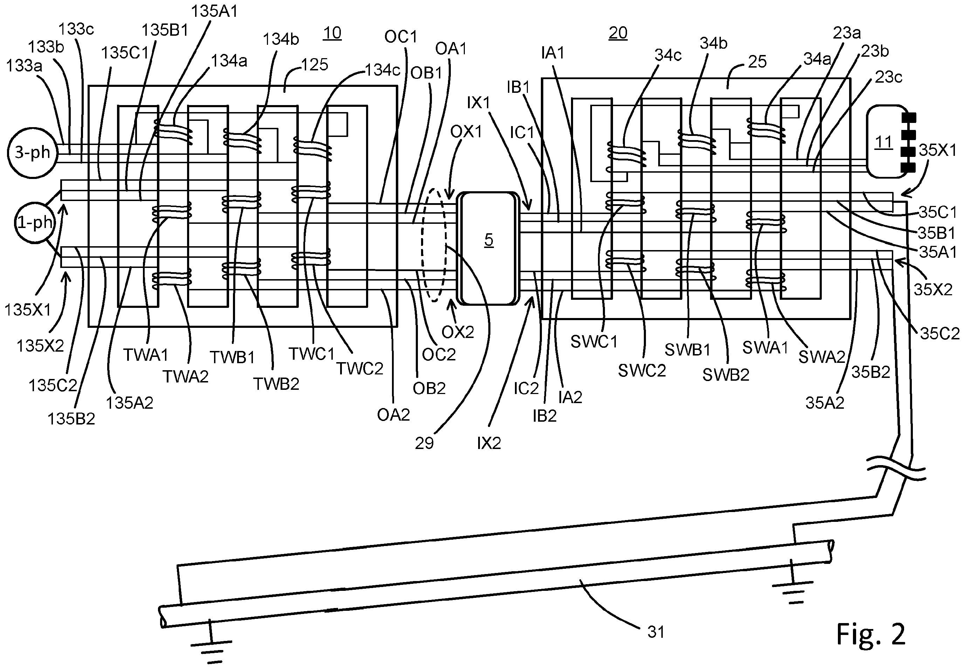

Fig. 2 depicts the first transformer 125, the second transformer 125, and the cable arrangement 29 between them. Also shown in Fig. 2 is how the pipeline 31 is connected to the second transformer 25 for heating of the pipeline.

On the left-hand side of Fig. 2, there is shown two power supplies connected to the first transformer 125, hence not corresponding to the set-up shown in Fig. 1. On the right-hand side, there is shown two power consumers in the form of the pipeline 31 and the subsea switchboard 11. It will be understood, however, that instead of two power consumers on the right-hand side, there could be one or two power supplies. Correspondingly, on the left-hand side of the first transformer 125, there could be two power consumers.

Three first primary windings 134a, 134b, 134c are wound about respective transformer legs of the first transformer 125. These windings are configured with a delta-configuration and connect to a three-phase power-supply. On the same transformer legs there are wound pairs of first secondary windings TWA1, TWA2, TWB1, TWB2, TWC1, TWC2. As shown, one pair of windings are wound about respective transformer legs. Furthermore, the windings of each pair are wound in the same direction. Each first secondary winding TWA1, TWA2, TWB1, TWB2, TWC1, TWC2 connects to a respective first secondary line 135A1, 135B1, 135C1, 135A2, 135B2, 135C2. In this embodiment, the first secondary lines connect to a 1-phase power supply. Thus, as shown, three first secondary lines 135A1, 135B1, 135C1 connect to one node of the 1-phase power supply, while the other three connect to the other node. The first secondary lines are divided into two sets 135X1, 135X2 of first secondary lines.

Since the current through one set 135X1 of first secondary lines 135A1, 135B1, 135C1 is opposite to the current through the other set 135X2 of first secondary lines 135A2, 135B2, 135C2, and the first secondary windings TWA1, TWA2, TWB1, TWB2, TWC1, TWC2 are wound in the same direction and same number of turns, the induced flux in the transformer legs are cancelled out. I.e. the current from the 1-phased power supply does not induce flux in the first transformer 125.

The current from the 1-phase power supply flows further through the conductors of the cable arrangement 29, and into second secondary windings SWA1, SWA2, SWB1, SWB2, SWC1, SWC2 of the second transformer 25. As the skilled reader will appreciate, the shown first transformer 125 corresponds to the second transformer 25. Thus, the current from the 1-phase power supplies flows through the second transformer 25 and into the steel pipeline 31.

The current flowing from the 3-phase power supply, on the left-hand side of the first transformer 125, will, however, induce flux in the transformer legs. This flux will induce current in the first secondary windings TWA1, TWA2, TWB1, TWB2, TWC1, TWC2 of the first transformer 125. This current will also induce a flux in the second transformer 25 at the second location 20. Furthermore, this induced flux will induce electric current in second primary windings 34a, 34b, 34c of the second transformer. Thus, the power from the 3-phase power supply will power the switchboard 11 connected to second primary lines 23a, 23b, 23c of the second transformer 25.

Also schematically depicted in Fig. 2 is the swivel 5 discussed with reference to Fig. 1 above. It will be appreciated that the power distribution system naturally would function without the swivel 5.

In the embodiment shown in Fig. 2, the cable arrangement 29 comprises six conductors. Through these six conductors, one is able to independently distribute electric power between a 3-phase power supply and a 3-phase power consumer, and a 1-phase power supply and a 1-phase consumer. Notably, the direction of power through the power distribution system is arbitrary. I.e. the 3-phase power could for instance be transmitted in the direction from the second transformer 25 to the first transformer 125, while the 1-phase power could be transmitted the opposite direction.

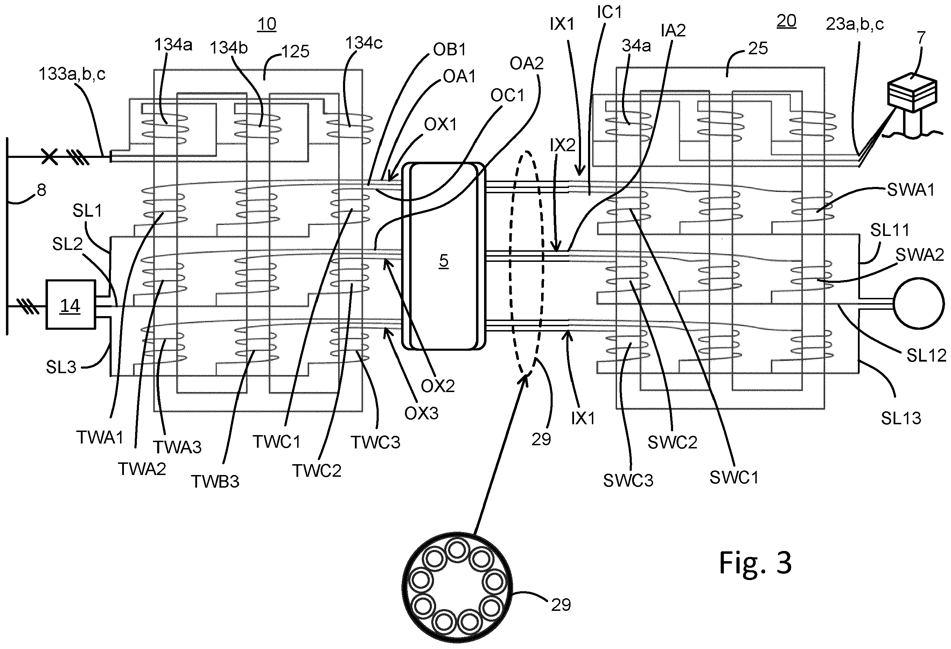

Fig. 3 depicts another embodiment. The functional principle is however the same as the principle of the embodiment shown in Fig. 2.

The first transformer 125 comprises three first primary lines 133a, 133b, 133c, configured to transmit 3-phase power. Furthermore, the first transformer 125 comprises three first secondary lines SL1, SL2, SL3, also configured to transmit 3-phase power.

In the shown embodiment, the first secondary lines SL1, SL2, SL3 connect to a variable speed driver (VSD / VFD) 14. The VSD 14 and the first primary lines are connected to a grid 8.

Each first secondary line SL1, SL2, SL3 connect to three first secondary windings TWA1, TWA2, TWA3, TWB1, TWB2, TWB3, TWC1, TWC2, TWC3, of which one winding is attached on respective transformer legs as shown in Fig. 3. Since the first secondary windings are wound in the same direction and with the same number of turns, the 3-phase current flowing through the respective first secondary line SL1, SL2, SL3 will induce fluxes in the transformer legs that cancel each other out. This corresponds to the embodiment shown in Fig. 2. Thus, 3-phase power is transmitted between the VSD 14 and a motor 15 that is connected to second secondary lines SL11, SL12, SL13 of the second transformer 25. Furthermore, power is transmitted between the PfS arrangement 7 and the three first primary lines 133a, 133b, 133c, on the same conductors in the cable arrangement 29. As indicated in Fig. 3, the cable arrangement 29 comprises nine conductors.

The electric power distribution system according to the invention will be beneficial in particular in combination with renewable power production. Since the sun does not always shine and the wind does not always blow, the flexibility offered with the disclosed system facilitates adjustment of power flows in desired directions.

The power distribution system may also be employed for powering hydrogen production during excessive renewable power production.

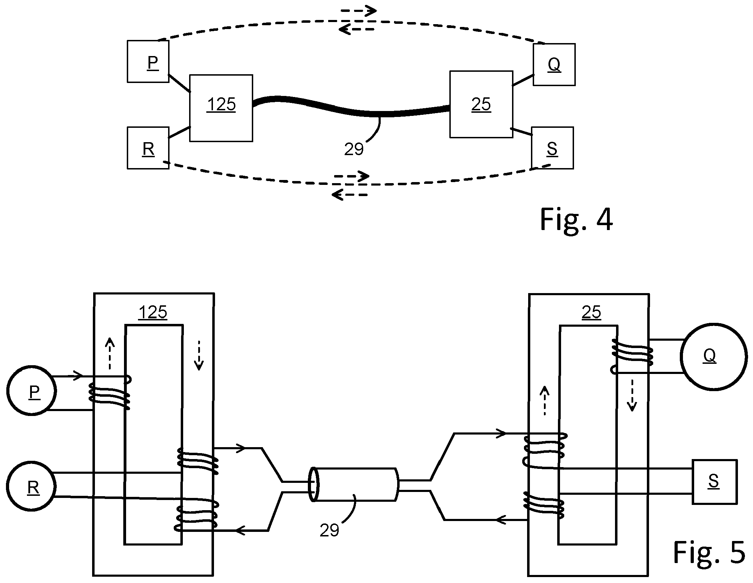

Fig. 4 schematically depicts, with a simplified diagram, the advantage of the invention. Electric end points P, Q of a first pair of end points are distributed on separate sides of the power distribution system. Electric end points R, S of a second pair of end points are also distributed on separate sides of the power distribution system. These end points may be electric power supplies or electric power consumers. Through the same conductors of the cable arrangement 29, electric power between the end points of the respective pair can be optionally directed.

Fig. 5 illustrates the inventive idea with a simplified electric diagram.

## Claims

1. Power distribution system configured to distribute electric power between a first location (10) and a second location (20), the power distribution system comprising at the first location (10):
- a first transformer (125) comprising:
- first primary windings (134a, 134b, 134c) connected to first primary lines (133a, 133b, 133c);
- pairs of first secondary windings (TWA1, TWA2, TWB1, TWB2, TWC1, TWC2);
- sets (135X1, 135X2) of first secondary lines (135A1, 135B1, 135C1, 135A2, 135B2, 135C2), wherein first secondary lines (135A1, 135B1, 135C1) of one set (135X1) connect to one first secondary winding (TWA1, TWB1, TWC1) of respective pairs of first secondary windings, and first secondary lines (135A2, 135B2, 135C2) of another set (135X2) connect to another first secondary winding (TWA2, TWB2, TWC2) of respective pairs of first secondary windings,
wherein respective first primary windings (134a, 134b, 134c) and respective pairs of first secondary windings (TWA1, TWA2, TWB1, TWB2, TWC1, TWC2) are wound about common transformer flux paths;
- sets (OX1, OX2) of first distribution lines (OA1, OB1, OC1, OA2, OB2, OC2), wherein first distribution lines (OA1, OB1, OC1) of one set (OX1) connect to one first secondary winding (TWA1, TWB1, TWC1) of respective pairs of first secondary windings, and first distribution lines (OA2, OB2, OC2) of another set (OX2) connect to another first secondary winding (TWA2, TWB2, TWC2) of respective pairs of first secondary windings;
and comprising at the second location (20):
- a second transformer (25) comprising;
- second primary windings (34a, 34b, 34c) connected to second primary lines (23a, 23b, 23c);
- pairs of second secondary windings (SWA1, SWA2, SWB1, SWB2, SWC1, SWC2);
- sets (35X1, 35X2) of second secondary lines (35A1, 35B1, 35C1, 35A2, 35B2, 35C2), wherein second secondary lines (35A1, 35B1, 35C1) of one set (35X1) connect to one second secondary winding (SWA1, SWB1, SWC1) of respective pairs of second secondary windings, and second secondary lines (35A2, 35B2, 35C2) of another set (35X2) connect to another second secondary winding (SWA2, SWB2, SWC2) of respective pairs of second secondary windings,
wherein respective second primary windings (34a, 34b, 34c) and respective pairs of second secondary windings (SWA1, SWA2, SWB1, SWB2, SWC1, SWC2) are wound about common transformer flux paths;
- sets (IX1, IX2) of second distribution lines (IA1, IB1, IC1, IA2, IB2, IC2), wherein second distribution lines (IA1, IB1, IC1) of one set (IX1) connect to one second secondary winding (SWA1, SWB1, SWC1) of respective pairs of second secondary windings, and second distribution lines (IA2, IB2, IC2) of another set (IX2) connect to another second secondary winding (SWA2, SWB2, SWC2) of respective pairs of first secondary windings;
and further comprising, between the first location (10) and the second location (20), a cable arrangement (29) connecting the first distribution lines (OA1, OB1, OC1, OA2, OB2, OC2) to the second distribution lines (IA1, IB1, IC1, IA2, IB2, IC2),
wherein the first secondary windings (TWA1, TWA2, TWB1, TWB2, TWC1, TWC2) are electrically connected between one respective first distribution line (OA1, OB1, OC1, OA2, OB2, OC2) and the first secondary lines (135A1, 135B1, 135C1, 135A2, 135B2, 135C2), and the second secondary windings (SWA1, SWA2, SWB1, SWB2, SWC1, SWC2) are electrically connected between one respective second distribution line (IA1, IB1, IC1, IA2, IB2, IC2) and the second secondary lines (35A1, 35B1, 35C1, 35A2, 35B2, 35C2),
wherein the windings of the respective pairs of first secondary windings (TWA1, TWA2, TWB1, TWB2, TWC1, TWC2) are wound in the same direction;
wherein the windings of the respective pairs of second secondary windings (SWA1, SWA2, SWB1, SWB2, SWC1, SWC2) are wound in the same directions.

2. Power distribution system configured to distribute electric power between a first location (10) and a second location (20), the power distribution system comprising at the first location (10):
- a first transformer (125) comprising:
- first primary windings (134a, 134b, 134c) connected to first primary lines (133a, 133b, 133c);
- first, second and third sets of first secondary windings (TWA1, TWA2, TWB1, TWB2, TWC1, TWC2);
- first secondary lines (SL1, SL2, SL3) that connect to a respective first set (TWA1, TWA2, TWA3), a second set (TWB1, TWB2, TWB3) and a third set (TWC1, TWC2, TWC3) of first secondary windings,
wherein respective first primary windings (134a, 134b, 134c) and respective sets of first secondary windings (TWA1, TWA2, TWA3, TWB1, TWB2, TWB3, TWC1, TWC2, TWC3) are wound about common transformer flux paths;
- a first set (OX1) of first distribution lines (OA1, OB1, OC1), a second set (OX2) of first distribution lines (OA2, OB2, OC2), and a third set (OX3) of first distribution lines (OA3, OB3, OC3),
wherein respective first distribution lines of the respective sets (OX1, OX2, OX3) connect to first secondary windings (TWA1, TWB1, TWC1) connected to respective secondary lines (SL1, SL2, SL3);
and comprising at the second location (20):
- a second transformer (25) comprising;
- second primary windings (34a, 34b, 34c) connected to second primary lines (23a, 23b, 23c);
- first, second and third sets of first secondary windings (SWA1, SWA2, SWB1, SWB2, SWC1, SWC2);
- second secondary lines (SL11, SL12, SL13) that connect to a respective first set (SWA1, SWA2, SWA3), a second set (SWB1, SWB2, SWB3) and a third set (SWC1, SWC2, SWC3) of second secondary windings, wherein respective second primary windings (34a, 34b, 34c) and respective sets of second secondary windings (SWA1, SWA2, SWA3, SWB1, SWB2, SWB3, SWC1, SWC2, SWC3) are wound about common transformer flux paths;
wherein respective second distribution lines of the respective sets (IX1, IX2, IX3) connect to second secondary windings (SWA1, SWB1, SWC1, SWA2, SWB2, SWC2) that are connected to respective secondary lines (SL11, SL12, SL13);
and further comprising, between the first location (10) and the second location (20), a cable arrangement (29) connecting the first distribution lines (OA1, OB1, OC1, OA2, OB2, OC2, OA3, OB3, OC3) to the second distribution lines (IA1, IB1, IC1, IA2, IB2, IC2, IA3, IB3, IC3),
wherein the first secondary windings (TWA1, TWA2, TWA3, TWB1, TWB2, TWB3, TWC1, TWC2, TWC3) are electrically connected between one respective first distribution line (OA1, OB1, OC1, OA2, OB2, OC2, OA3, OB3, OC3) and the first secondary lines (SL1, SL2, SL3),
and the second secondary windings (SWA1, SWA2, SWA3, SWB1, SWB2, SWB3, SWC1, SWC2, SWC3) are electrically connected between one respective second distribution line (IA1, IB1, IC1, IA2, IB2, IC2, IA3, IB3, IC3) and the second secondary lines (SL11, SL12, SL13),
wherein the windings of the respective first set (TWA1, TWA2, TWA3), second set (TWB1, TWB2, TWB3) and third set (TWC1, TWC2, TWC3) of first secondary windings are wound in the same direction;
wherein the windings of the respective first set (SWA1, SWA2, SWA3), second set (SWB1, SWB2, SWB3) and third set (SWC1, SWC2, SWC3) of second secondary windings are wound in the same direction.

3. A power distribution system according to claim 1 or claim 2, wherein the first primary windings (134a, 134b, 134c) and the second primary windings (34a, 34b, 34c) have a delta-configuration, and wherein the first secondary windings (TWA1, TWA2, TWB1, TWB2, TWC1, TWC2) and the second secondary windings (SWA1, SWA2, SWB1, SWB2, SWC1, SWC2) have an Y-configuration.

4. A power distribution system according to one of the preceding claims, further comprising a swivel (5) comprising electric slip rings, wherein the electric connections between the first distribution lines (OA1, OB1, OC1, OA2, OB2, OC2) and the second distribution lines (IA1, IB1, IC1, IA2, IB2, IC2) run through the swivel.

5. A power distribution system according to one of the preceding claims, wherein the second transformer (25) further comprises auxiliary windings (225) connected to auxiliary primary lines (223), wherein the auxiliary windings are wound with a delta-configuration.

6. A power distribution system according to one of the preceding claims, wherein the second transformer (25) is arranged at the seabed, wherein one respective set (35X1, 35X2) of second secondary lines (35A1, 35B1, 35C1, 35A2, 35B2, 35C2) connect to one respective end of a length of steel pipeline (31) arranged on the seabed.

7. A power distribution system according to one of the preceding claims,
wherein the second primary lines (23a, 23b, 23c) connect to a power source delivering electric power from shore.

8. A method of using the power distribution system according to one of the preceding claims, **characterized in**
- transmitting electric power from the second primary lines (23a, 23b, 23c) to the first primary lines (133a, 133b, 133c) and simultaneously transmitting electric power from the first secondary lines (135A1, 135B1, 135C1, 135A2, 135B2, 135C2) to the second secondary lines (35A1, 35B1, 35C1, 35A2, 35B2, 35C2); or
- transmitting electric power from the first primary lines (133a, 133b, 133c) to the second primary lines (23a, 23b, 23c) and simultaneously transmitting electric power from the second secondary lines (35A1, 35B1, 35C1, 35A2, 35B2, 35C2) to the first secondary lines (135A1, 135B1, 135C1, 135A2, 135B2, 135C2).

9. A power distribution system comprising a first transformer (125) at a first location (10) and a second transformer (25) at a second location (20), wherein two electric end points (P, R), being electric power supplies or consumers, are connected to the first transformer (125) at the first location and two electric end points (Q, S), being electric power supplies or consumers, are connected to the second transformer (25), wherein a cable arrangement (29) comprising a plurality of cable conductors extends between the first and second transformers, **characterized in that** the power distribution system is configured to distribute electric power between two electric end points of a respective first pair of end points (P, Q) and a second pair of end points (R, S) at arbitrary direction and simultaneously through the same cable conductors of the cable arrangement (29).
